# EUROPEAN PATENT APPLICATION

(11) **EP 1 467 579 A1**
(43) Date of publication of application: **13.10.2004**
(21) Application number: 03290891.5
(22) Date of filing: 10.04.2003
(51) Int. Cl.: H04Q 7/22

(54) **A method of operating a mobile communication system**

(71) Applicant: ALCATEL, 75008 Paris (FR)
(72) Inventor: Berg, Markus, Dipl.-Ing., 70176 Stuttgart (DE); Allerborn, Wilhelm, Dipl.ing., 71254 Ditzingen (DE); Egler, Wolfgang, Dr., 70734 Fellbach (DE); Ebmeyer, Jürgen, Dipl.-Ing., 70619 Stuttgart (DE)
(74) Representative: Schäfer, Wolfgang, Dipl.-Ing.

(57) **Abstract**

A method of operating a mobile communication system is described. The mobile communication system comprises a mobile station. A latitude and a longitude of a position of the mobile station are provided. An altitude of the position of the mobile station is evaluated and provided. Location-based services are provided depending on the altitude.

## Description

The invention relates to a method of operating a mobile communication system. The invention also relates to a mobile station, to a base station and to a mobile location center of a mobile communication system as well as to a mobile communication system as such.

It is known to transmit the latitude and the longitude of the geographical position of a mobile station within a mobile communication system. The respective parameters are defined in the 3rd Generation Partnership Project, Technical Specification Group Core Network, Mobile Application Part (MAP) Specification (3GPP TS 29.002, see e.g. http://www.3gpp.org/ftp/Specs/archive/29_series/). These geographical parameters may be used in connection with location-based services.

It is an object of the invention to provide new services for the subscriber of the mobile station.

This object is solved by a method according to claim 1. The object is also solved by the other independent claims.

According to the invention, the altitude of the position of the mobile station is evaluated and provided. Based on this altitude, new location-based services can be provided depending on the altitude.

According to advantageous embodiments of the invention, the direction of the movement and/or the velocity of the movement of the mobile station are evaluated and provided. Again, new location-based services can be provided depending on these parameters.

Further features, applications and advantages of the inventions will become apparent from the following description of exemplary embodiments of the invention. All described features themselves or in any combination represent the subject matter of the invention, independently of their wording in the description and independently of their combination in the claims or the dependencies of the claims.

In mobile communication systems, for example in the Global System for Mobile Communication (GSM) or in the Universal Mobile Telecommunication System (UMTS), data is transmitted between a mobile station (MS) of a subscriber and a base station (BTS or Node B). Among others, it is possible to transmit parameters representing the geographical position of the mobile station. These parameters comprise the latitude and the longitude of the geographical position of the mobile station.

In addition to the latitude and the longitude, an altitude of the position of the mobile subscriber is also transmitted between the mobile station and the base station.

The altitude of the mobile station may be measured by a satellite positioning device, e.g. the Global Positioning System (GPS). Alternatively or in addition, the altitude may also be evaluated by a topographic database depending on the latitude and/or the longitude of the mobile station. As well, the altitude may be provided by a meteoric device measuring for example the atmospheric pressure at the position of the mobile station. Furthermore, again as an alternative or in addition, the altitude may be established by a device evaluating the beaming information of a smart antenna of the mobile station and/or the base station.

The altitude is then forwarded from the respective afore-mentioned device to the mobile station and/or to the base station. In particular, the altitude is sent to a mobile location center (MLC). There, the altitude is used for providing services to the subscriber of the mobile station which are based on the location of the mobile station.

The afore-mentioned location-based services may comprise a weather forecast for the specific location which provides e.g. the temperature as a function of the altitude of the mobile station. The services may also comprise find-me functions which consider the altitude of the mobile station. As well, tracking functions e.g. for walkers may be offered as further services which take account of the altitude of the mobile station.

In addition to the latitude and the longitude and as an alternative or an addition to the altitude, a direction of a movement of the mobile station is also transmitted between the mobile station and the base station.

The direction of the movement of the mobile station may be measured with one or more devices as described above. The direction of the movement is then sent to the mobile location center (MLC). There, the direction of the movement is used for providing services to the subscriber of the mobile station which are based on the location of the mobile station. The mentioned location-based services may comprise find-me functions or meet-me functions or toll systems which consider the direction of the movement.

In addition to the latitude and the longitude and as an alternative or an addition to the altitude and/or the direction of the movement, a velocity of a movement of the mobile station is also transmitted between the mobile station and the base station.

The velocity of the movement of the mobile station may be measured with one or more devices as described above. The velocity of the movement is then sent to the mobile location center (MLC). There, the velocity of the movement is used for providing services to the subscriber of the mobile station which are based on the location of the mobile station. The mentioned location-based services may comprise find-me functions or meet-me functions or toll systems which consider the velocity of the movement. In particular, the velocity of the movement may be used in any kind of service relating to sport activities like cycling, jogging, walking, driving, and so on.

All parameters, i.e. the latitude, the longitude, the altitude, the direction of movement an the velocity of movement are transmitted in a common protocol.

## Claims

1. A method of operating a mobile communication system, wherein the mobile communication system comprises a mobile station, wherein a latitude and a longitude of a position of the mobile station are provided, wherein an altitude of the position of the mobile station is evaluated and provided, and wherein location-based services are provided depending on the altitude.

2. The method of claim 1, wherein a direction of a movement of the mobile station is evaluated and provided, and wherein location-based services are provided depending on the direction of the movement.

3. The method of claim 1 or 2, wherein a velocity of a movement of the mobile station is evaluated and provided, and wherein location-based services are provided depending on the velocity of the movement.

4. The method of one of claims 1 to 3, wherein the altitude and/or the direction of movement and/or the velocity of movement are provided by a satellite positioning device and/or by a topographic database depending on the latitude and/or the longitude and/or by a meteoric device measuring for example the atmospheric pressure and/or by a device evaluating the beaming information of a smart antenna.

5. The method of one of claims 1 to 4, wherein the latitude, the longitude, the altitude, the direction of movement and/or the velocity of movement are transmitted in a common protocol.

6. A mobile station (MS) of a mobile communication system, wherein a latitude and a longitude of a position of the mobile station are provided, wherein an altitude of the position of the mobile station is evaluated and provided, and wherein location-based services are provided depending on the altitude.

7. The mobile station of claim 6, wherein the mobile station comprises a smart antenna, and wherein the altitude is provided by evaluating the beaming information of the smart antenna.

8. The mobile station of claim 6 or 7, wherein the mobile station comprises a satellite positioning device and/or a topographic database depending on the latitude and/or the longitude and/or a meteoric device measuring for example the atmospheric pressure, and wherein the altitude is provided by evaluating one or more of these devices.

9. A base station (BTS or Node B) of a mobile communication system, wherein the mobile communication system comprises a mobile station, wherein a latitude and a longitude of a position of the mobile station are provided, wherein an altitude of the position of the mobile station is evaluated and provided, and wherein location-based services are provided depending on the altitude.

10. The base station of claim 9, wherein the base station comprises a smart antenna, and wherein the altitude is provided by evaluating the beaming information of the smart antenna.

11. A mobile location center (MLC) of a mobile communication system, wherein the mobile communication system comprises a mobile station, wherein a latitude and a longitude of a position of the mobile station are provided, wherein an altitude of the position of the mobile station is evaluated and provided, and wherein location-based services are provided depending on the altitude.

12. The mobile location center of claim 11, wherein the latitude, the longitude and the altitude are sent to the mobile location center, and wherein the mobile location center provides the location-based services.

13. A mobile communication system, wherein the mobile communication system comprises a mobile station, wherein a latitude and a longitude of a position of the mobile station are provided, wherein an altitude of the position of the mobile station is evaluated and provided, and wherein location-based services are provided depending on the altitude.
